(19) Europäisches Patentamt / European Patent Office / Office européen des brevets

(11) EP 2 570 796 A1

(12) EUROPEAN PATENT APPLICATION

(43) Date of publication:
**20.03.2013 Bulletin 2013/12**

(51) Int Cl.:
***G01N 19/02*** *(2006.01)*

(21) Application number: **11181763.1**

(22) Date of filing: **19.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **The Gillette Company**
**Boston, MA 02127 (US)**

(72) Inventors:
- **Girdler, Claire Elizabeth**
  **Reading, Berkshire RG2 0DR (GB)**
- **Riches, Alison Mary**
  **Reading, Berkshire RG7 5LY (GB)**
- **Baxter, Elaine Alice Marie**
  **St. Margarets, Middlesex TW1 2QX (GB)**
- **Chan, Sophia**
  **Reading, Berkshire RG5 3JD (GB)**

(74) Representative: **Chandrani, Vandita**
**Procter & Gamble Company**
**Patents**
**London Innovation Centre**
**Whitehall Lane**
**Egham**
**Surrey TW20 9NW (GB)**

# (54) Shaving Measurement Method and Apparatus

(57) A shaving measurement apparatus, comprising a pad having a top surface, an arm configured to hold a cartridge, the cartridge having a contact surface, and the arm being moveable relative to the pad to bring the contact surface of the cartridge into contact with and/or away from the top surface of the pad, and to move the cartridge along the pad with the contact surface in contact with the top surface, and a sensor coupled to the cartridge for measuring a load on the cartridge as it is moved relative to the pad, and a method of using the same.

Fig. 1
12
5
16
14
7
9
4
13
1
3
11
15
6
8
2
10
100

EP 2 570 796 A1

**Description**

FIELD OF THE INVENTION

The present invention relates to means for assessing friction resulting from the use of razors for shaving.

BACKGROUND OF THE INVENTION

A concern in the development of hair removal products, especially razors for shaving, is the level of comfort for the user both during and after use, as well as how the process feels on the skin generally. In particular, a razor that drags or feels slippery on the skin of a user may be considered undesirable. Various interventions are used in order to improve this situation, for example modifying the construct of a razor cartridge and/or the blades housed therein, including a lubricating portion on the razor cartridge and/or using shaving preparations designed to help the razor move readily across the surface of the body while maintaining ease of control.

An important parameter in judging an improvement in the comfort afforded by a new shaving product such as a new razor design or composition for use in conjunction with a razor is the coefficient of friction between the razor's hair cutting surface and the surface of the skin. Changes in the coefficient of friction affect how a user perceives the razor while it is passing over the surface of the body. Accordingly, alterations to the coefficient of friction are sought in order to control the perception of shaving, in particular with reference to the comfort and ease of control. In order to know whether alternations have the desired effect, the coefficient of friction must be measured.

The coefficient of friction for a prototype razor may be measured using an *in vivo* technique such as the one described in US20080168657 which relies on sensors in the razor to measure the coefficient of friction. However, an *in vivo* method requires a large number of participants to conduct the test in order to improve the reliability of the results, which requires significant periods of time and, for hygiene reasons, necessitates the production of a large number of prototype razors which is undesirable when a large number of different prototypes are under consideration. Furthermore, participants may change their behaviour when using different products, which can make it difficult to assess the true differences in coefficient of friction from one product to another, when using existing methods of measurement.

Accordingly, there remains a need for a method able to rapidly and reliably assess a prototype shaving product to understand the impact of modifications made on the coefficient of friction and/or drag load, these being indicative of possible changes to shaving comfort.

SUMMARY OF THE INVENTION

According to a first embodiment of the invention, a shaving measurement apparatus is provided, comprising a pad having a top surface, an arm configured to hold a cartridge, the cartridge having a contact surface, and the arm being moveable relative to the pad to bring the contact surface of the cartridge into contact with and/or away from the top surface of the pad, and to move the cartridge along the pad with the contact surface in contact with the top surface, and a sensor coupled to the cartridge for measuring a load on the cartridge as it is moved relative to the pad.

According to a second embodiment of the invention, a method of measuring shaving friction is provided, comprising the steps of providing a shaving friction measurement apparatus according to the first embodiment of the invention, moving the arm so as to draw the contact surface of the cartridge over the top surface, measuring a load on the cartridge, and optionally moving the cartridge away from the top surface.

BRIEF DESCRIPTION OF THE DRAWINGS

Fig. 1 is a schematic of the apparatus according to the first embodiment of the invention.
Fig. 2 is a schematic of a cartridge suitable for use in the present invention. The inset shows a view from underneath the cartridge as depicted, i.e. through the top surface.

DETAILED DESCRIPTION OF THE INVENTION

In a first aspect, the present invention relates to an apparatus for assessing shaving prototypes.

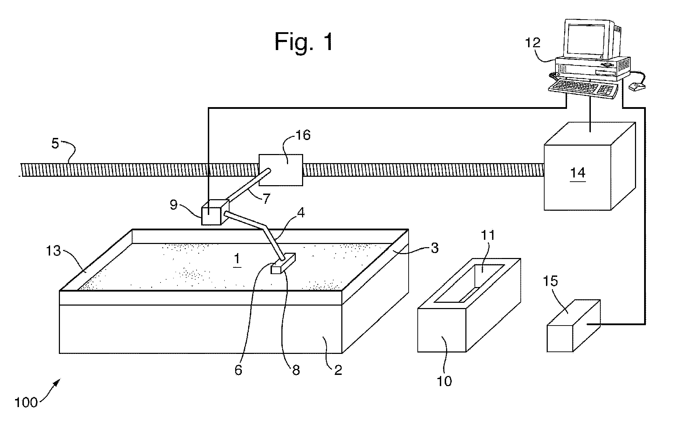

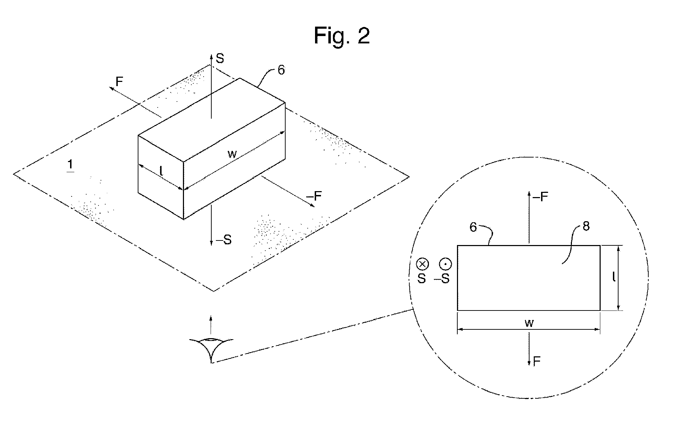

Referring to Fig. 1, apparatus 100 comprises a pad having top surface 1 sat on or in housing 2. Housing 2 may preferably comprise walls 3 around the perimeter of top surface 1 in order to enable a liquid medium to be placed in contact with top surface 1. Cartridge 6 is held by arm 7 by means, for example, of a clamp or adhesive, optionally via razor 4. Alternatively, cartridge 6 may be held directly by arm 7 or an extension thereof. Cartridge 6 has a contact surface 8 that can make contact with top surface 1 (including being separated therefrom by a material or composition such as a shaving preparation, lubricating chemistry or water). Referring now also to Fig. 2, Arm 7 is moveable along track 5 in a first direction F in a plane parallel to top surface 1, i.e. so as to enable contact surface 8 of cartridge 6 to be drawn along top surface 1. Arm 7 is also moveable in a second direction S in a plane perpendicular to top surface 1, i.e. so as to enable contact surface 8 of cartridge 6 to be drawn away from and/or towards top surface 1. Cartridge 6 is coupled to sensor 9 for measuring the drag load (particularly as arm 7 moves in first direction F with contact surface 8 moving along and in contact with top surface 1) such as a load cell from which the initial result of the experiment (the drag load) may be communicated.

Apparatus

Apparatus 100 may further comprise a vessel 10 configured to contain a liquid and to receive at least a portion of cartridge 6. Vessel 10 may be made of any suitable liquid impermeable material or combination thereof, for example plastic, metal or glass, and should comprise aperture 11, preferably through which contact surface 8 is able to pass, advantageously without requiring rotation and notably when cartridge 6 moves in second direction S or its opposite, -S. Vessel 10 is preferably located along the line of first direction F in order to enable arm 7 to move readily from dipping contact surface 8 into a liquid in vessel 10 to making a measurement stroke by moving arm in first direction F. This reduces the number of directions in which arm 7 needs to be able to move and thus simplifies apparatus 100 overall. Vessel 10 may further comprise a temperature changing element in order to be able to increase, decrease or maintain the temperature of a liquid placed therein which may be desirable in some experiments.

Apparatus 100 may also comprise a computer 12 programmed to control and/or monitor the apparatus, and in particular sensor 9 for measuring the drag load, sensor 15 for measuring the normal load, and any associated motors (e.g. motor 14). This enables the provision of an automated apparatus able to make one or more sequences of motions in order to make measurements concerning e.g. changes with subsequent strokes or average values. For example, arm 7 may be automatically lowered so that contact surface 8 touches top surface 1, moved in first direction F to measure the drag load, raised to move contact surface 8 away from top surface 1, and reversed along first direction F (i.e. moved in direction -F) to return arm 7 and contact surface 8 to their respective starting points. This sequence may be repeated in order to build a data set of multiple measurements. Additional steps of dipping contact surface 8 into vessel 10 may also be incorporated.

Apparatus 100 may be placed in a cabinet or other housing for safety and protection from air turbulence or inadvertent interference. Apparatus 100 may also further comprise a camera, preferably directed towards top surface 1 and thus providing a means of acquiring images or video of the experiment for analysis and/or troubleshooting, e.g. if a highly unexpected result is obtained, the record of the stroke may be reviewed to ensure the stroke was correct.

Top surface

Top surface 1 may be integral with a pad that is firmly placed on or in housing 2, or may be integral with housing 2, in which case housing 2 forms the pad referred to herein. A firm placement is preferably used to avoid the pad moving during the experiment, which may lead to misleading results. This firm attachment may be made, for example, by means of adhesive.

Top surface 1 may be formed of any material or combination of materials, and is preferably a skin mimic surface, i.e. is made of a material suitable to be used as a model for skin, for example polyurethane. Top surface 1 may be untreated or surface treated, for example by plasma coating or by other means to attain surface properties resembling those of skin, preferably human skin. For example, top surface 1 may be a skin mimic surface having a plasma treated polyurethane surface.

Top surface 1 preferably has a width of at least 40mm and a length of at least 15mm as this enables the whole of a face of typical razor cartridge to touch top surface 1 and be drawn along it over a suitable distance to replicate a typical shaving stroke. Preferably, the length of top surface 1 is from 20mm to 300mm, more preferably from 50mm to 200mm, even more preferably from 80mm to 150mm and even more preferably still from 90mm to 120mm. Also preferably, top surface 1 has a width of from 50mm to 300mm, more preferably from 70mm to 200mm and even more preferably from 100mm to 150mm.

To top surface 1, a composition may be applied. Such a composition may be water, another liquid or solution, shaving preparation or solution thereof (for example a shave gel or shave foam with or without additional water present) or a solid material, especially chosen from lubricating solids such as particulates. As used herein, any composition used in conjunction with shaving is referred to as a shaving composition. The apparatus of the present invention may thus be used to understand and/or compare the effect of compositions upon the coefficient of friction and/or drag load between cartridge 6 and top surface 1.

Preferably, top surface 1 is housed within tray 13 configured to receive and hold a liquid. This enables assessments to be carried out of razor cartridges or substitutes thereof in a liquid medium, i.e. using a liquid as a lubricant without the liquid being free to wash off top surface 1, which may lead to poorer repeatability of results. In another preferable embodiment, top surface 1 (or the pad which comprises it) is replaceable to prevent wear or contamination build-up over time or through multiple experiments, which may lead to inferior quality of results.

Sensor for Measuring Load

Coefficient of friction and drag load are related quantities, as equation (1) below shows:

$$\mu = F_d / F_n \qquad (1)$$

where $F_d$ is the drag load, $F_n$ the normal load and $\mu$ the coefficient of friction between two surfaces (in the case of the present invention contact surface 8 of cartridge 6 and top surface 1).

Apparatus 100 comprises sensor 9 for measuring drag load. Sensor 9 is coupled to cartridge 6. As such, sensor 9 is in physical communication with cartridge 6 but need not be directly attached thereto (i.e. there may be other components transmitting forces to sensor 9 from cartridge 6). Preferably, sensor 9 forms the only connection between arm 7 (or the portion connected to runner 16) and cartridge 6, i.e. any force acting between arm 7 and cartridge 6, particularly in first direction F, must pass through sensor 9.

Any known sensor for measuring drag load may be used in accordance with the present invention. Such a sensor typically measures the force required to move arm 7 at a predefined speed/acceleration, which may be in conjunction with a device that provides a controlled normal load perpendicular to the direction of movement and between the two surfaces moving relative to one another. An exemplary sensor for measuring the drag load (and therefore coefficient of friction) is a load cell, which may for example comprise a strain gauge or piezoelectrics as active components. For example, a strain gauge would measure increasing force across it until a neutral position is reached at which cartridge 6 is moving at the same speed as runner 16, and hence arm 7. Sensor 9 may comprise or be connected to a display or recording device but is preferably connected to computer 12 in order to enable the real-time acquisition of data, which may then be used in calculations either automatically (e.g. by computer 12) or separately.

Balance 15 may be used to measure the normal load prior to taking a measurement of the drag load, which value may then be used in equation (1) above in order to calculate the coefficient of friction. Any suitable balance may be used and is preferably connected to computer 12 in order to facilitate the automatic measurement of the normal load and calculations using equation (1). Additionally or alternatively, a sensor for measuring the normal load, which may be of the same nature as described in the paragraph above (e.g. may be a load cell), may measure the normal load dynamically (or in real-time), providing data which can then be (automatically or manually) used for calculations. If not measured, the normal load may be calculated or estimated based upon the mass of arm 7, cartridge 6 and other associated components.

It is particularly preferred to acquire data on both the drag load and the normal load dynamically and in real-time, as this enables direct comparison of the two measurements at a given point in time, and helps to improve the quality of any calculation of coefficient of friction.

Arm

Arm 7 is moveable relative to top surface 1 both to bring contact surface (8) of cartridge (6) into contact with and/or away from top surface (1), and to move cartridge (6) along the pad with contact surface (8) in contact with the top surface (1). For example, arm 7 may move along track 5, in first direction F in order to measure the drag load and also moveable in second direction S to separate cartridge 6 from top surface 1. Arm 7 may follow any path comprising both of these directions, for example, moving separately in first direction F then in second direction S, or in a curved path (e.g. a parabola) having components in the first and second directions.

Preferably arm 7 is motorized (for example by motor 14), e.g. to move in the first and/or second directions and may comprise runner 16 as an integral or connected component that also moves along track 5. Advantageously, arm 7 is firmly connected to runner 16, so that motion of runner 16 directly translates into motion of arm 7. The motorization of arm 7 may not necessarily be directly between arm 7 and track 5, but may instead be derived from track 5 or the movement thereof or of a component thereof. For example, in an advantageous embodiment, track 5 comprises a rotatable screw thread that extends through a threaded bore in runner 16 and so upon rotation (e.g. by motor 14) causes runner 16 and arm 7 to move along top surface 1, i.e. in first direction F. While so moving, sensor 9 for measuring the drag load directly measures the force required to move contact surface 8 along top surface 1. Advantageously, the motor of arm 7 may operate at different speeds and/or accelerations in order to allow the user to customize the motion of arm 7 to simulate different shaving stroke types and replicate typical shaving behaviours.

Arm 7 may be constructed of any suitable material, including but not limited to glass, wood, metal or plastic, is preferably constructed of metal, and may extend from track 5 to approximately the middle of top surface 1. Arm 7 may comprise one or more component parts arranged in a linear or angular fashion to enable contact surface 8 to lie against top surface 1. Razor 4 and/or cartridge 6 is firmly attached to arm 7 by any known means, for example by the use of adhesive or one or more screws or bolts. Arm 7 may further comprise a device that provides a controlled load perpendicular to top surface 1 and contact surface 8, for example one or more weights in order to tailor the normal load on cartridge 6. Preferably, the normal load is from 10g to 2000g, more preferably from 50g to 1000g, even more preferably from 100g to 700g, even more preferably still from 150g to 500g and yet more preferably from 200g to 300g, as measured on an appropriately calibrated balance.

Advantageously, arm 7 is able to hold razor 4 and/or cartridge 6 at a variety of angles relative to top surface 1 and may fix this angle in order to gain understanding in a particularly controlled environment. Alternatively, arm 7 may allow rotation of razor 4 and/or cartridge 6 relative to top surface 1 (even though razor 4 and/or cartridge 6 may be held at one of a variety of angles when in a neutral position). For example, this freedom of rotation may allow cartridge 6 to pivot as is a feature of some modern razor designs or may simulate the softer touch of a user compared to a relatively rigid metal arm, and thus more closely simulate a razor stroke.

Cartridge

Cartridge 6 may be integral with the handle of razor 4 (such as in a disposable razor), a formerly integral component of razor 4 from which the handle and/or another part has been removed, or a distinct item, either connected to, or separated from a razor body and/or handle, such as the disposable cartridges supplied in and for razor systems in which the handle is re-used and the cartridge replaced. When a razor cartridge is used in the present invention, contact surface 8 is formed by the contact areas on the razor cartridge, typically for example the blade edges, any lubricating portion(s) and guards. These contact areas may remain the same from one experiment to another in order to obtain good comparative data in changing another aspect related to shaving (e.g. a chemical component of a shaving preparation), or may be changed in order to assess any difference this makes to the expected perception of shaving with the prototype cartridge/razor.

A substitute for a razor cartridge may be used in place of an actual razor cartridge. As used herein, any mention of a cartridge in respect of the present invention should be taken to refer to both an actual razor cartridge and also to a substitute for a razor cartridge. Such a substitute may comprise a block of material having a contacting side that comprises contact surface 8 configured to be drawn across top surface 1 by the apparatus of the present invention. Advantageously, the contact surface has dimensions approximately the same as the outer perimeter of the shaving face of a razor cartridge of interest, or a typical razor cartridge, and as much may be rectangular or substantially rectangular in shape (as used herein "substantially rectangular" indicates that one or more of the following may be true: the corners may be formed of rounded vertices, one or more of the angles between sides may not be exactly 90° and/or the opposing sides may not be of exactly the same length). For example, and referring again to Fig. 2, contact surface 8 may have a width w (perpendicular to first direction F) of from 3cm to 6cm, preferably from 4cm to 5cm, a length 1 (parallel to first direction F) of from 0.5cm to 5cm, preferably from 1cm to 3.5cm, in order to more closely conform to the size and shape of a typical razor cartridge’s shaving face.

The substitute may be made from any suitable, preferably non-absorbent, material, for example plastic, metal or glass. In a preferred embodiment the substitute comprises a portion (especially a layer) of polymeric material, for example epoxy resin, acetate polymer or acrylic polymer, and especially epoxy resin, located on the contacting side and placed to form the contact surface of the substitute. The layer or portion may be detachable from the substitute to facilitate easy modification and/or cleaning.

The substitute may be modified in a variety of ways in order to assess different shapes, chemistries or other features. As an example, the substitute may further comprise utilized or prototype components of a razor cartridge, for example existing chemistries or polymeric members such as the housing/guard or fins seen in razor cartridges marketed presently, in order to more closely represent a typical cartridge or assess the impact of any prototype features of a shaving product upon the coefficient of friction and/or drag load.

The cartridge may further comprise a lubricating composition, for example a utilized or prototype composition to be assessed. Such a lubricating composition may be solid or liquid and may form a layer on the contact surface 8 of the cartridge. Preferably, such a layer has a thickness of from 0.01mm to 10mm, more preferably from 0.1mm to 5mm, even more preferably from 0.5mm to 2mm, even more preferably still from 0.7mm to 1.5mm and yet more preferably from 0.8mm to 1.2mm. Additionally or alternatively, the substitute may comprise one or more grooves into the contact surface, into which a composition (especially a solid composition) to be assessed may be placed. The groove or grooves may run in any direction, and need not be linear but may be of any shape, for example curved or forming a shape (e.g.

circle, rectangle, triangle) or pattern (e.g. stripes, cross-hatching).

Method

A second aspect of the present invention is also provided, being a method of measuring shaving friction comprising the steps of providing a shaving friction measurement apparatus according to the first aspect of the invention, moving the arm so as to draw the contact surface of the cartridge over the top surface, measuring a load on the cartridge, and optionally moving the cartridge away from the top surface.

Preferably, contact surface 8 of cartridge 6 is drawn over top surface 1 (a stroke) for a length of at least 5mm, preferably from 20mm to 300mm, more preferably from 50mm to 200mm, even more preferably from 80mm to 150mm and even more preferably still from 90mm to 120mm, in order to more closely simulate a typical shaving stroke, and gain more reliable results.

The speed at which the stroke is taken, i.e. the speed at which contact surface 8 of cartridge 6 is drawn over top surface 1, may be controlled. For example, it may be advantageous that the speed be (as far as is practicable) constant throughout a stroke. Exemplary stroke speeds may be from 5 mm/s to 1000 mm/s, preferably from 10 mm/s to 800 mm/s, more preferably from 20 mm/s to 600mm/s, even more preferably from 50 mm/s to 400mm/s, even more preferably still from 100 mm/s to 300 mm/s and yet more preferably from 150 mm/s to 200 mm/s. In a preferred embodiment, the speed and acceleration of the stroke may be varied either within one of the above ranges or outside them, in order to be able to tailor the method to a desired condition, e.g. to replicate a particular style of shaving stroke.

The method may further comprise the step of immersing at least a portion of contact surface 8 of shaving cartridge 6 into a liquid, preferably a dilute shaving preparation or water and more preferably a dilute shaving preparation, advantageously before moving the arm so as to draw a surface of the cartridge over the top surface. The duration of immersion may be short or long, for example as short as is practicable, alternatively from 1 to 60 seconds, preferably from 5 to 40 seconds, more preferably from 10 to 30 seconds and more preferably still from 15 to 25 seconds. If desired, a step may also be taken to heat or cool any such liquid in order to more closely reflect real shaving conditions. Additionally or alternatively, the temperature of the liquid may be maintained.

The method may further comprise the step of rinsing at least a portion of cartridge 6 (preferably at least a portion of contact surface 8 of cartridge 6) or at least a portion of top surface 1 with a liquid, preferably a dilute shaving preparation or water and more preferably a dilute shaving preparation.

Where a lubricating chemistry to be applied to cartridge 6 is to be assessed, the method further comprises the step of coating at least a portion of contact surface 8 of cartridge 6 with a liquid or solid composition. Alternatively, if contact surface 8 of cartridge 6 comprises at least one groove, the method may comprise a step of inserting a solid composition into at least one of the at least one grooves.

The method may also further comprise a final step of repeating one or more of the preceding steps to enable, for example, multiple steps of dipping the cartridge into a liquid, the determination of average or median values or to identify variations in results as a function of time or number of strokes taken. Preferably, one or more of the method steps are repeated from 2 to 20 times, more preferably from 4 to 16 times, even more preferably from 6 to 14 times and even more preferably still from 8 to 12 times. For example, the method step of taking a stroke may in particular be repeated multiple times according to the ranges above, especially in combination with repeating the dipping step between taking each stroke. However, if the normal load is being measured, particularly if by balance 15, a single measurement may be used for calculations based upon measurements from a sequence of multiple other steps, e.g. multiple repeated strokes or stroke and dipping sequences. The normal load may also be measured multiple times in order to obtain an average or median value thereof.

The method itself may also be repeated in its entirety, e.g.. to assess a different sample of the same prototype in order to ensure consistency of results. It is advantageous, therefore, to follow the method at least twice, preferably at least three times, more preferably at least four times, even more preferably at least five times and even more preferably still at least ten times. In a particularly preferred embodiment, therefore, the entire method comprising from 6 to 12 strokes per run may be conducted from 2 to 5 times, each time using a different sample of the same prototype or existing shaving product.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

**1.** A shaving friction measurement apparatus (100) comprising:

a. a pad having a top surface (1),
b. an arm (7) configured to hold a cartridge (6), the cartridge (6) having a contact surface (8), the arm (7) being moveable relative to the pad to:

i. bring the contact surface (8) of the cartridge (6) into contact with and/or away from the top surface (1) of the pad, and
ii. move the cartridge (6) along the pad with the contact surface (8) in contact with the top surface (1), and

c. a sensor (9) coupled to the cartridge (6) for measuring a load on the cartridge (6) as it is moved relative to the pad.

**2.** A shaving friction measurement apparatus according to claim 1 wherein the arm is moveable along at least a first direction (F) in a plane substantially parallel to the top surface and in a second direction (S) in a plane substantially perpendicular to the top surface.

**3.** A shaving friction measurement apparatus according to either preceding claim, further comprising a motor (14) configured to move the arm.

**4.** A shaving friction measurement apparatus according to any preceding claim, wherein the top surface is housed within a tray (13) configured to receive and hold a liquid.

**5.** A shaving friction measurement apparatus according to any preceding claim, further comprising a vessel (10) configured to contain a liquid and to receive at least a portion of the cartridge, preferably wherein said vessel is located along the line of the first direction from the top surface.

**6.** A shaving friction measurement apparatus according to any preceding claim, further comprising a computer (12) configured to control and/or monitor the apparatus.

**7.** A shaving friction measurement apparatus according to any preceding claim, wherein the top surface is a skin mimic surface, preferably comprising a polymeric surface, natural or synthetic rubber, more preferably a polymeric surface, and even more preferably a polyurethane surface.

**8.** A shaving friction measurement apparatus according to any preceding claim, wherein the cartridge comprises an optionally removable portion, preferably comprising a polymeric material, more preferably a polymeric material selected from an epoxy resin, an acetate polymer or an acrylic polymer and more preferably an epoxy resin.

**9.** A shaving friction measurement apparatus according to any of claims 1-7, wherein the cartridge is a razor cartridge.

**10.** A shaving friction measurement apparatus according to any preceding claim, wherein the cartridge comprises at least one groove in the contact surface, preferably wherein at least one of the at least one groove comprises a shaving composition.

**11.** A shaving friction measurement apparatus according to any preceding claim, further comprising a sensor (15) for measuring the normal load through the cartridge, preferably wherein said sensor for measuring the normal load is a balance or load cell, more preferably wherein said sensor is a load cell.

**12.** A method of measuring shaving friction comprising the steps of:

a. providing a shaving friction measurement apparatus according to any preceding claim,
b. moving the arm so as to draw the contact surface of the cartridge over the top surface,
c. measuring a load on the cartridge, and
d. optionally moving the cartridge away from the top surface.

**13.** A method of measuring shaving friction according to claim 12 further comprising the step of immersing at least a portion of the contact surface of the cartridge into a liquid, preferably a dilute shaving preparation, before moving the arm so as to draw the cartridge over the top surface.

**14.** A method of measuring shaving friction according to either of claims 12 or 13, further comprising the step of measuring the normal load on the cartridge.

**15.** A method of measuring shaving friction according to any of claims 12 to 14, further comprising a step of repeating one or more of the preceding steps, preferably repeating the preceding steps from 2 to 20 times, more preferably from 4 to 16 times, even more preferably from 6 to 14 times and even more preferably still from 8 to 12 times.

Fig. 1

12
16
5
14
9
7
4
11
13
3
1
15
6
8
2
10
100

Fig. 2

S
6
F
w
1
l
–F
–S
–F
6
8
S
–S
l
w
F

Europäisches
Patentamt
European
Patent Office
Office européen
des brevets

# EUROPEAN SEARCH REPORT

Application Number
EP 11 18 1763

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| Y | FR 2 769 535 A1 (BIC SOC [FR]) 16 April 1999 (1999-04-16)<br>* figure 1 *<br>* page 7, line 15 - page 8, line 19 *<br>----- | 1-15 | INV.<br>G01N19/02 |
| Y | US 6 349 587 B1 (MANI NEEL K [US] ET AL) 26 February 2002 (2002-02-26)<br>* figures 1-2 *<br>* column 5, line 18 - line 23 *<br>* column 5, line 36 - column 6, line 15 *<br>----- | 1-15 | |
| Y,D | US 2008/168657 A1 (CLOKE CINZIA SIMONIS [US] ET AL) 17 July 2008 (2008-07-17)<br>* figures 1-3 *<br>* paragraphs [0022] - [0030] *<br>----- | 1-15 | |
| A | US 2003/109811 A1 (KOENIG DAVID W [US] ET AL) 12 June 2003 (2003-06-12)<br>* figures 1-3 *<br>* paragraphs [0020], [0027] - [0028] *<br>----- | 1-15 | TECHNICAL FIELDS SEARCHED (IPC)<br>G01N<br>G01L<br>B26B |

The present search report has been drawn up for all claims

| Place of search | Date of completion of the search | Examiner |
|---|---|---|
| The Hague | 25 January 2012 | Bockstahl, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 11 18 1763

This annex lists the patent family members relating to the patent documents cited in the above-mentioned European search report. The members are as contained in the European Patent Office EDP file on
The European Patent Office is in no way liable for these particulars which are merely given for the purpose of information.

25-01-2012

| Patent document cited in search report | Publication date | Patent family member(s) | Publication date |
|---|---|---|---|
| FR 2769535 A1 | 16-04-1999 | AU 738251 B2 | 13-09-2001 |
| | | AU 9632598 A | 03-05-1999 |
| | | BR 9812930 A | 08-08-2000 |
| | | CA 2305506 A1 | 22-04-1999 |
| | | CN 1278204 A | 27-12-2000 |
| | | DE 69803479 D1 | 28-02-2002 |
| | | DE 69803479 T2 | 26-09-2002 |
| | | EP 1023144 A1 | 02-08-2000 |
| | | ES 2171310 T3 | 01-09-2002 |
| | | FR 2769535 A1 | 16-04-1999 |
| | | JP 4213860 B2 | 21-01-2009 |
| | | JP 2001519222 A | 23-10-2001 |
| | | NZ 503873 A | 31-08-2001 |
| | | PL 339809 A1 | 02-01-2001 |
| | | RU 2194610 C2 | 20-12-2002 |
| | | US 6405438 B1 | 18-06-2002 |
| | | WO 9919124 A1 | 22-04-1999 |
| US 6349587 B1 | 26-02-2002 | NONE | |
| US 2008168657 A1 | 17-07-2008 | AT 492378 T | 15-01-2011 |
| | | AU 2008204276 A1 | 17-07-2008 |
| | | CN 101578164 A | 11-11-2009 |
| | | EP 2101966 A1 | 23-09-2009 |
| | | JP 2010515515 A | 13-05-2010 |
| | | US 2008168657 A1 | 17-07-2008 |
| | | WO 2008084429 A1 | 17-07-2008 |
| US 2003109811 A1 | 12-06-2003 | AR 038008 A1 | 22-12-2004 |
| | | AU 2002323554 A1 | 23-06-2003 |
| | | MX PA04005355 A | 27-09-2004 |
| | | US 2003109811 A1 | 12-06-2003 |
| | | WO 03050510 A1 | 19-06-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080168657 A